# FASCICULE DE BREVET EUROPEEN

(11) **EP 3 436 491 B1**
(45) Date de publication et mention de la délivrance du brevet: **16.06.2021**
(21) Numéro de dépôt: 17719657.3
(22) Date de dépôt: 03.04.2017
(51) Int. Cl.: C08G 8/04, C09J 161/06, C09J 161/12, C08J 5/04, D06M 15/41, D06M 15/693, C08J 5/12, C09J 5/00, B27N 3/00

(54) **COMPOSITION ADHESIVE AQUEUSE COMPORTANT UNE RESINE THERMODURCISSABLE**
WÄSSRIGE KLEBSTOFFZUSAMMENSETZUNG MIT EINEM WÄRMEHÄRTBAREN HARZ
AQUEOUS ADHESIVE COMPOSITION COMPRISING A THERMOSETTING RESIN

(30) Priorité: 01.04.2016 FR 1652894
(43) Date de publication de la demande: 06.02.2019
(73) Titulaire: Compagnie Générale des Etablissements Michelin, 63000 Clermont-Ferrand (FR)
(72) Inventeur: DOISNEAU, David, 63040 CLERMONT-FERRAND CEDEX 9 (FR); MICHOUD, Clément, 63040 CLERMONT-FERRAND CEDEX 9 (FR)
(74) Mandataire: Louret, Sylvain
(86) Numéro de dépôt international: PCT/FR2017/050778
(87) Numéro de publication internationale: WO 2017/168109

(56) Documents cités:
- WO-A1-2015/123781
- WO-A2-2014/118163
- JP-B2- 3 361 819
- US-A- 2 776 948
- US-A1- 2008 125 517

## Description

Le domaine de la présente invention concerne des compositions adhésives aqueuses destinées à faire adhérer des éléments, l'utilisation et le procédé de fabrication d'une telle composition, le procédé d'assemblage d'éléments au moyen de ces compositions ainsi que les assemblages fabriqués à l'aide de ces compositions.

Les phénoplastes ou « résines phénol-formaldéhyde » (sigle PF) sont issus du formaldéhyde et du phénol. Le phénol étant une molécule présentant plusieurs sites réactifs, il se forme finalement un réseau tridimensionnel. Les phénoplastes sont notamment utilisés en tant qu'adhésifs, par exemple pour la fabrication de bois agglomérés ou de matériaux composites renforcés avec des fibres de verre, fibres textiles, ...

Dans le domaine du bois, une composition de type phénol-aldéhyde est décrite dans US2360376. Cette composition comprend une résine phénol-aldéhyde à base de formaldéhyde et de phénol. Le rapport molaire formaldéhyde sur phénol est compris dans un domaine de valeurs allant de 2 à 3,5. On utilise cette composition dans un procédé de collage d'articles en contreplaqué comprenant plusieurs plis en bois. Au cours de ce procédé, on enduit un ou plusieurs plis d'une couche de la composition, on joint les plis les uns aux autres par l'intermédiaire de la couche de composition et on cuit sous pression les plis ainsi joints. L'assemblage collé ainsi obtenu présente une cohésion élevée grâce aux excellentes propriétés adhésives de la composition.

Toutefois, l'utilisation de formaldéhyde (ou formol), qui plus est en excès par rapport au phénol, entraine la libération de formaldéhyde non seulement lors de la cuisson sous pression mais également lors du stockage et de l'utilisation de l'assemblage collé. Or, en raison de l'évolution récente de la réglementation, notamment de la réglementation européenne sur ce type de composé, on souhaite limiter autant que possible, voire supprimer l'utilisation de formaldéhyde ou de précurseur de formaldéhyde.

L'invention a pour but de fournir une composition aqueuse adhésive, comprenant une résine thermodurcissable, présentant des propriétés adhésives élevées et dépourvue de formaldéhyde.

Or, au cours de leurs recherches, les Demanderesses ont découvert une composition adhésive aqueuse n'utilisant pas de formol libre qui permet de répondre à l'objectif ci-dessus.

Dans leur demande WO2014/118163, les Demanderesses ont proposé des compositions adhésives aqueuses pour le collage du bois comportant d'une part une résine phénol-aldéhyde et moins de 16% en masse de latex d'élastomère diénique insaturé.

La résine phénol-aldéhyde est à base d'au moins un polyaldéhyde aromatique et d'au moins un polyphénol aromatique. La présence de deux fonctions aldéhydes sur le polyaldéhyde est une caractéristique essentielle, nécessaire pour assurer un collage suffisant.

Les compositions adhésives qui y sont décrites constituent une alternative forte intéressante à l'emploi des colles phénoplaste conventionnelles.

Toutefois, les résines phénol-aldéhyde qui y sont décrites sont faiblement solubles dans l'eau et nécessitent notamment une forte agitation lors de leur ajout dans la composition aqueuse. Cette forte agitation fait appel à des appareils coûteux et augmente la durée du procédé.

Il existe donc un besoin en d'autres résines thermodurcissables alternatives, qui pourraient efficacement remplacer les colles phénoplaste.

Ainsi, un premier objet de l'invention concerne une composition adhésive aqueuse comportant A) une résine thermodurcissable à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant :
   - un noyau aromatique porteur de trois fonctions hydroxyle en position méta l'une par rapport à l'autre, les deux positions ortho d'au moins une des fonctions hydroxyle étant non substituées ; ou
   - plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans une variante, la composition adhésive aqueuse comprend moins de 16 % en masse de latex d'élastomère diénique insaturé.

Un autre objet de l'invention concerne une solution adhésive aqueuse comprenant une résine thermodurcissable pré-condensée à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant :
   - un noyau aromatique porteur de trois fonctions hydroxyle en position méta l'une par rapport à l'autre, les deux positions ortho d'au moins une des fonctions hydroxyle étant non substituées ; ou
   - plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Un autre objet de l'invention concerne l'utilisation de la composition adhésive aqueuse selon l'invention, ou de la solution adhésive aqueuse comportant une résine thermodurcissable à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées,
pour le collage de deux éléments, en particulier de deux éléments en bois.

Il est également décrit un procédé de collage de deux éléments, dans lequel:
- on applique une couche de la composition adhésive aqueuse comportant une résine thermodurcissable telle que définie dans la revendication 14 sur au moins l'un des deux éléments, et
- on joint les deux éléments l'un à l'autre par l'intermédiaire de la couche de la composition adhésive aqueuse.

L'invention concerne également un assemblage collé de deux éléments comprenant une couche de la composition adhésive aqueuse comportant une résine thermodurcissable telle que définie dans la revendication 14 joignant les deux éléments l'un à l'autre.

L'invention ainsi que ses avantages seront aisément compris à la lumière de la description qui suit.

### I - FORMULATION DE LA COMPOSITION ADHESIVE AQUEUSE

Dans la présente description, sauf indication expresse différente, tous les pourcentages (%) indiqués sont des % en masse.

Par "position méta l'une par rapport à l'autre", on entendra que les fonctions visées, par exemple les fonctions hydroxyle dans le polyphénol aromatique, sont portées par des carbones du noyau aromatique séparés l'un de l'autre par un unique autre carbone du noyau aromatique.

Par "position para l'une par rapport à l'autre", on entendra que les fonctions visées sont à l'opposées l'une de l'autre, c'est-à-dire en positions 1 et 4 du noyau aromatique à 6 chaînons. De façon analogue, "la position para" par rapport à une fonction est une position opposée à la fonction sur le noyau aromatique à 6 chaînons portant la fonction.

Par "en position ortho d'une fonction", on entendra la position occupée par le carbone du noyau aromatique immédiatement adjacent au carbone du noyau aromatique portant la fonction. De façon analogue, "la position ortho" par rapport à une fonction est la position adjacente à la fonction sur le noyau aromatique portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH₂OH » représente la fonction hydroxyméthyle.

Le « composé A1 » désigne, dans le cadre de l'invention, le composé aromatique défini au paragraphe I.1.

Le « composé A2 » désigne, dans le cadre de l'invention, le composé à base de polyphénol aromatique défini au paragraphe I.2.

Le « composé A'2 » désigne, dans le cadre de l'invention, le composé à base de monophénol aromatique défini au paragraphe I.2.

Par « polyphénol aromatique » on entend un composé aromatique comprenant au moins un noyau benzénique porteur de plus d'une fonction hydroxyle.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, du matériau textile, des composites ou articles finis comportant de tels composites, en particulier au cours d'une étape de cuisson.

La composition adhésive aqueuse selon l'invention comprend donc au moins une (c'est-à-dire une ou plusieurs) résine thermodurcissable selon l'invention, cette résine thermodurcissable est quant à elle à base d'au moins un (c'est-à-dire un ou plusieurs) composé aromatique et au moins un (c'est-à-dire un ou plusieurs) polyphénol aromatique, constituants qui vont être décrits en détail ci-après.

### 1.1 - Composé aromatique A1

Le premier constituant essentiel de la résine thermodurcissable est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle. Ainsi, conformément à l'invention, c'est ledit noyau aromatique qui est porteur des fonctions hydroxyméthyle et aldéhyde. Le composé selon l'invention répond donc à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé est de formule générale (II) : 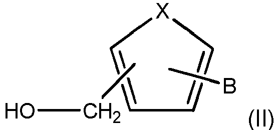 dans laquelle B représente CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

Avantageusement, le composé est de formule générale (II') : 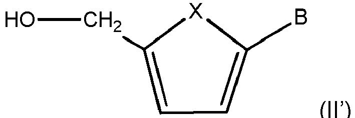 dans laquelle X, B sont tels que définis précédemment.

Dans un mode de réalisation particulièrement avantageux, B représente CHO. Dans un autre mode de réalisation, B représente CH₂OH.

Selon un mode de réalisation préférentiel, X représente O.

Dans une variante, le composé est de formule (IIa) : 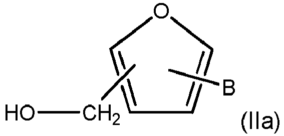 B étant tel que défini précédemment
et plus particulièrement de formule (II'a1) ou (II'a2) :

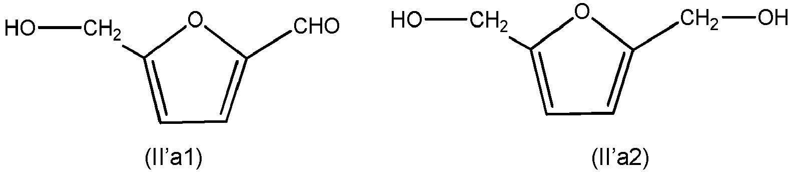

Le 5-(hydroxyméthyl)-furfural (II'a1) est un aldéhyde particulièrement adapté, étant donné que ce composé organique peut facilement être issu de ressources renouvelables. En effet, il est issu notamment de la déshydratation de certains sucres tels que le fructose, le glucose, le sucrose, la cellulose et l'inuline.

Dans un autre mode de réalisation, X représente NR₁ ou NO, avantageusement NR₁. R₁ est tel que défini précédemment.

Dans une variante, le composé est de formule (IIb) : 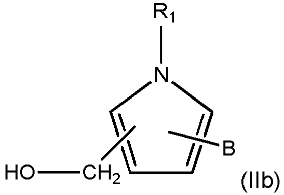 B étant tel que défini précédemment
et plus particulièrement de formule (II'b1) ou (II'b2) : 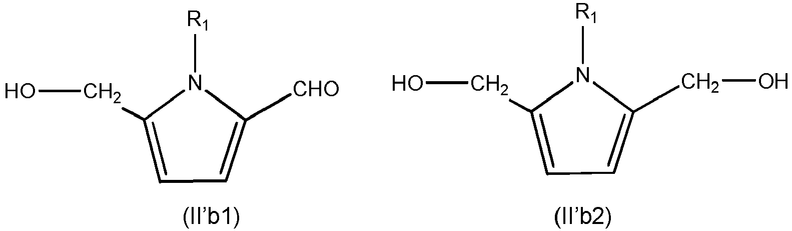 dans lesquelles R₁ représente un hydrogène, un groupe alkyle, aryle, arylalkyle, alkylaryle ou cycloalkyle. Avantageusement R₁ représente un hydrogène ou un groupe alkyle en C₁-C₆.

Dans un autre mode de réalisation, X représente S, SO, SO₂ ou SR₂R₃.

Dans une variante, le composé est de formule (IIc) :
B étant tel que défini précédemment 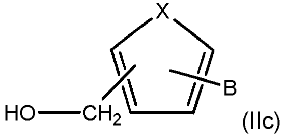 avec X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B étant tel que défini précédemment ;
et plus particulièrement de formule (II'c1) ou (II'c2) : 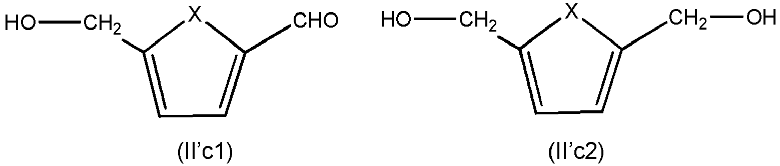
dans laquelle X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé peut ainsi être :

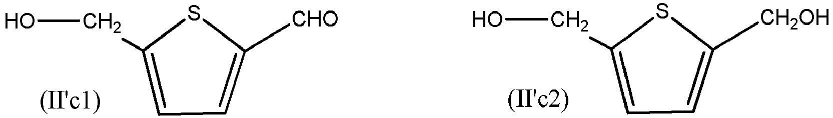

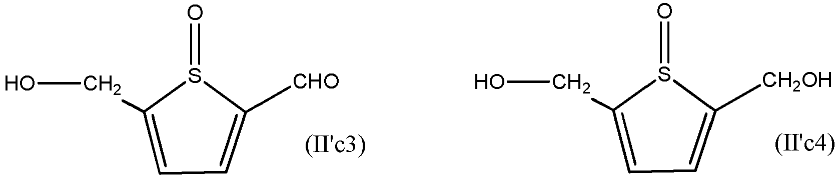

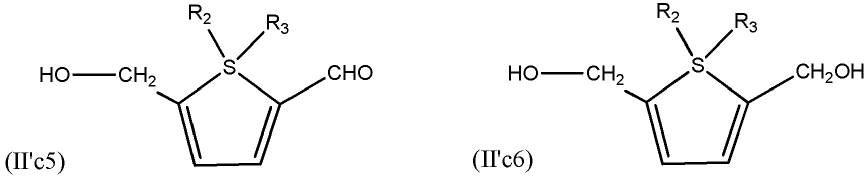

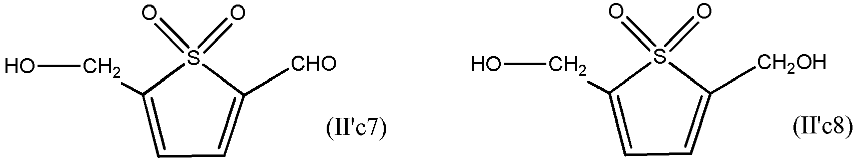

Avantageusement R₂, R₃ représentent chacun, l'un indépendamment de l'autre, un radical alkyle en C₁-C₆.

Le composé est avantageusement de formule (II'c1) ou (II'c2).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé est de formule générale (III) : 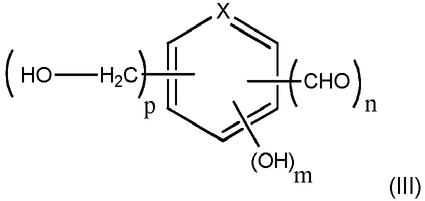 dans laquelle X représente C ou NR₁, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Conformément à l'invention, p+n>1 avec p>0.

Avantageusement R₁ représente un hydrogène ou un groupe alkyle en C₁-C₆.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique de l'aldéhyde est un noyau benzénique. Plus préférentiellement, cet aldéhyde est choisi dans le groupe constitué par le 2-hydroxymethyl-benzène-1-carboxaldéhyde, le 3- hydroxymethyl -benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxy-benzène, le 1,3,5-hydroxymethyl-4-hydroxy-benzène, le 1,3,2-hydroxymethyl-2-hydroxy-benzène et les mélanges de ces composés.

Encore plus préférentiellement le composé aromatique utilisé est le 1-hydroxymethyl-benzène-4-carboxaldéhyde de formule (IIIa) ou le 1,4-hydroxymethyl-benzène de formule (IIIb) :

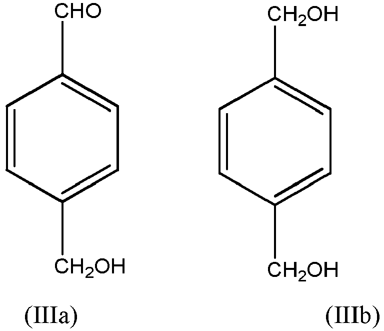

De préférence, lorsque la résine thermodurcissable est à base de polyphénol et d'un ou plusieurs composés de formule **(I)**, la composition est dépourvue de formaldéhyde.

Lorsque la résine thermodurcissable est à base de polyphénol, d'un ou plusieurs composés de formule (I) et d'aldéhydes, chaque aldéhyde est préférentiellement différent du formaldéhyde. La composition est alors également dépourvue de formaldéhyde.

En d'autres termes et de manière préférée, lorsqu'un aldéhyde est présent, le ou chaque aldéhyde de la résine thermodurcissable est différent du formaldéhyde.

Par dépourvue de formaldéhyde, on entend que le taux massique de formaldéhyde en poids total du ou des aldéhydes est inférieur ou égal à 10%, de préférence à 5% et plus préférentiellement à 2%, ces pourcentages correspondant à des traces susceptibles d'être présentes dans le ou les aldéhydes utilisés industriellement.

### I.2 - Polyphénol aromatique et/ou monophénol aromatique - composés A2 et/ou A2'

Dans un mode de réalisation, le deuxième constituant essentiel de la résine thermodurcissable est un polyphénol aromatique A2 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Dans un autre mode de réalisation, le deuxième constituant essentiel est un mélange du polyphénol aromatique A2 tel que décrit ci-dessus et de monophénol aromatique A2' comprenant au moins un noyau aromatique à six chainons portant une unique fonction hydroxyle. Sur ce monophénol aromatique, les deux positions ortho de la fonction hydroxyle sont non substituées, ou bien au moins une position ortho et la position para de la fonction hydroxyle sont non substituées..

Ainsi, dans ce mode de réalisation, la résine thermodurcissable selon l'invention est également à base :
A2') d'au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées.

Conformément à l'invention, le composé A2) peut être, dans un mode de réalisation, une molécule simple de polyphénol aromatique comprenant :
un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

De façon analogue, le composé A2') peut être, dans un mode de réalisation, une molécule simple de monophénol aromatique comprenant un ou plusieurs noyaux aromatiques à six chainons, au moins un de ces noyaux aromatiques à six chainons, voire chaque noyau aromatique à six chainons, étant porteur d'une unique fonction hydroxyle, les deux positions ortho de la fonction hydroxyle sont non substituées, ou bien, au moins une position ortho et la position para de la fonction hydroxyle sont non substituées.

De telles molécules simples ne comprennent pas de motif répétitif.

Conformément à l'invention, le composé A2) peut être, dans un autre mode de réalisation, une résine pré-condensée à base :
(I) d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; ;
   et
   - d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

D'une façon analogue et conformément à l'invention, le composé A2') peut être, dans un autre mode de réalisation, une résine pré-condensée à base :
- d'au moins un monophénol aromatique comprenant au moins un noyau aromatique à six chainons portant une unique fonction hydroxyle :
   - les deux positions ortho de la fonction hydroxyle sont non substituées, ou
   - au moins une position ortho et la position para de la fonction hydroxyle sont non substituées;
- d'au moins un composé susceptible de réagir avec ledit monophénol aromatique comprenant au moins une fonction aldéhyde et/ou au moins un composé susceptible de réagir avec ledit monophénol aromatique comprenant au moins deux fonctions hydroxyméthyle portées par un noyau aromatique.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'une unique fonction hydroxyle.

Dans un autre mode de réalisation, le composé A2) et/ou A2') est un mélange d'un polyphénol aromatique formant une molécule simple et d'une résine pré-condensée à base de polyphénol aromatique.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A2

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le noyau aromatique porteur d'au moins deux fonctions hydroxyles en position méta l'une par rapport à l'autre, les deux positions ortho d'au moins une des fonctions hydroxyles étant non substituée, est un noyau benzénique.

Avantageusement, chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées respectivement (IV) et (V):

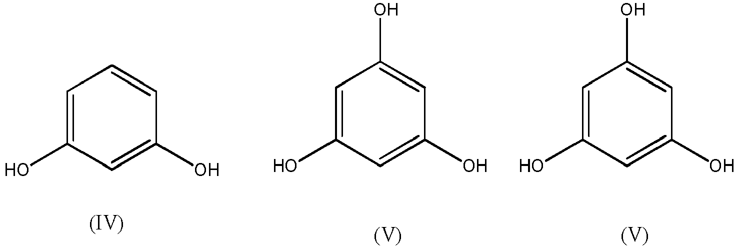

A titres d'exemples, dans le cas où le polyphénol aromatique comporte plusieurs noyaux aromatiques, au moins deux de ces noyaux aromatiques, identiques ou différents, sont choisis parmi ceux de formules générales : 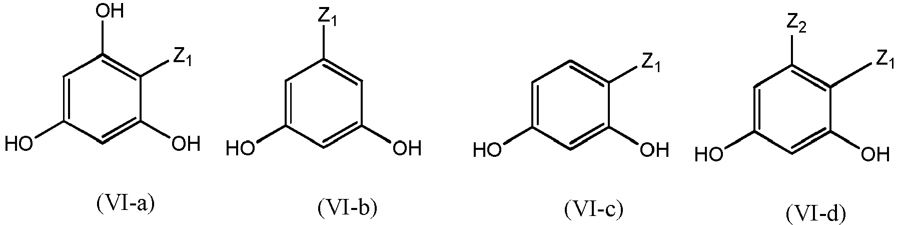 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

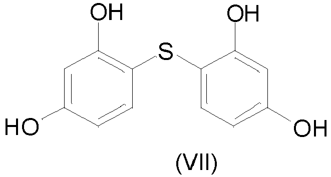

Un autre exemple de polyphénol aromatique est le 2,2',4,4'-tétrahydroxybenzophénone de formule développée suivante (VIII) :

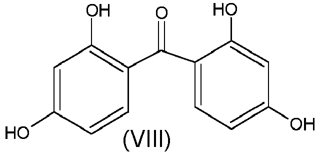

On note que chaque composé VII et VIII est un polyphénol aromatique comportant deux noyaux aromatiques (de formules VI-c) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule VI-b, les deux positions ortho de chaque fonction hydroxyle d'au moins un noyau aromatique sont non substituées. Dans le cas d'un polyphénol aromatique comportant plusieurs noyaux aromatiques conformes à la formule VI-b, les deux positions ortho de chaque fonction hydroxyle de chaque noyau aromatique sont non substituées.

Selon un mode de réalisation de l'invention, le polyphénol aromatique est choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et les mélanges de ces composés. Dans un mode de réalisation particulièrement avantageux, le polyphénol aromatique est le phloroglucinol.

Dans un mode de réalisation, le composé A2) comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et leurs mélanges ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

Le composé susceptible de réagir avec ledit polyphénol aromatique peut être un composé aromatique tel que défini précédemment au paragraphe I.1, un composé de formule Ar-(CHO)₂, où Ar est tel que défini précédemment pour le composé aromatique du paragraphe I.1, ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le composé A2) peut également comprendre un mélange d'une molécule libre de polyphénol aromatique et d'une résine pré-condensée à base de polyphénol aromatique, telle que décrite précédemment. En particulier, le composé A2) peut également comprendre un mélange de phloroglucinol et d'une résine pré-condensée à base de phloroglucinol.

### Monophénol aromatique A2'

Le monophénol A2' peut être conforme à deux variantes. Dans une variante, les deux positions ortho de la fonction hydroxyle sont non substituées. Dans une autre variante, au moins une position ortho et la position para de la fonction hydroxyle sont non substituées.

Avantageusement, dans la variante dans laquelle au moins une position ortho et la position para de la fonction hydroxyle sont non substituées, une unique position ortho est non substituée et la position para de la fonction hydroxyle est non substituée.

De préférence, quelle que soit la variante, les deux positions ortho de la fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le monophénol aromatique comprend plusieurs noyaux aromatiques à six chainons, au moins deux d'entre eux étant chacun porteur d'une unique fonction hydroxyle et, pour au moins une des fonctions hydroxyles, les deux positions ortho de la fonction hydroxyle sont non substituées, ou au moins une position ortho et la position para de la fonction hydroxyle sont non substituées.

De préférence, les deux positions ortho de chaque fonction hydroxyle d'au moins un noyau aromatique à six chainons sont non substituées.

Encore plus préférentiellement, les deux positions ortho de chaque fonction hydroxyle de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le ou chaque noyau aromatique du monophénol aromatique est un noyau benzénique.

De préférence, le monophénol aromatique est choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés.

Dans un mode de réalisation, le composé A2') comprend une résine pré-condensée à base du monophénol aromatique tel que décrit dans l'un quelconque de ces modes de réalisations.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec ledit monophénol aromatique comprenant au moins une fonction aldéhyde et/ou au moins un composé susceptible de réagir avec ledit monophénol aromatique comprenant au moins deux fonctions hydroxyméthyle portées par un noyau aromatique.

Le composé susceptible de réagir avec ledit monophénol aromatique peut être un composé aromatique tel que défini précédemment au paragraphe I.1, un composé de formule Ar-(CHO)₂, où Ar est tel que défini précédemment pour le composé aromatique du paragraphe I.1, ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif répond aux caractéristiques du monophénol aromatique définies précédemment à l'exception qu'au moins un des atomes de carbone du noyau aromatique à six chainons, qui était non substitué, est relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1 conforme à l'invention dans une étape ultérieure.

Le composé A2') peut également comprendre un mélange d'une molécule libre de monophénol aromatique et d'une résine pré-condensée à base de monophénol aromatique, telle que décrite précédemment. En particulier, le composé A2') peut également comprendre un mélange de phénol et d'une résine pré-condensée à base de phénol.

### I.3 - Latex d'élastomère insaturé

On rappelle qu'un latex est une dispersion stable de microparticules d'élastomère(s) en suspension dans une solution généralement aqueuse. Un latex d'élastomère est donc une composition dans un état liquide comprenant un solvant liquide, généralement de l'eau, et au moins un élastomère ou un caoutchouc dispersé dans le solvant liquide de façon à former une émulsion. Ainsi, le latex n'est pas une composition de caoutchouc qui comprend une matrice d'élastomère ou de caoutchouc dans laquelle est dispersé au moins un autre composant. Une composition de caoutchouc est dans un état plastique à l'état cru (non-réticulé) et dans un état élastique à l'état cuit (réticulé) mais en aucun cas dans un état liquide comme l'est un latex.

Dans un mode de réalisation, la composition selon l'invention ne comprend pas de latex.

Dans un autre mode de réalisation, la composition selon l'invention comprend du latex.

Les latex d'élastomère insaturé (c'est-à-dire porteur de doubles liaisons carbone-carbone), notamment d'élastomère diénique, sont bien connus de l'homme du métier. Ils constituent notamment la base élastomérique des colles résorcinol-formaldéhyde-latex, « RFL », décrites par exemple dans US 2 561 215, US 3 817 778.

Conformément à l'invention, l'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

Dans un mode particulier, la composition selon l'invention comprend moins de 16 % (valeur exclue) en masse de latex d'élastomère diénique insaturé. Par pourcentage en masse de la composition, on comprend le pourcentage en masse de la composition totale, c'est-à-dire masse de latex sur masse des constituants secs plus masse de l'eau.

De préférence, la composition comprend au plus 10 %, de préférence au plus 5 %, et plus préférentiellement au plus 1% en masse de latex d'élastomère diénique insaturé.

### I.4 - Solution adhésive aqueuse comprenant une résine pré-condensée de l'invention

L'invention a également pour objet une solution adhésive aqueuse comprenant une résine pré-condensée à base :
A1) d'au moins un composé aromatique porteur d'au moins deux fonctions, l'une de ces fonctions étant une fonction hydroxyméthyle, l'autre étant une fonction aldéhyde ou une fonction hydroxyméthyle, le composé aromatique comprend au moins un noyau aromatique; et
A2) d'au moins polyphénol aromatique comprenant :
   - un noyau aromatique porteur de trois fonctions hydroxyle en position méta l'une par rapport à l'autre, les deux positions ortho d'au moins une des fonctions hydroxyle étant non substituées ; ou
   - plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Avantageusement, la résine pré-condensée selon l'invention est également à base:
A2') d'au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées.

Le composé aromatique est tel que décrit précédemment, en particulier il s'agit d'un composé de formule (I) telle que définie précédemment.

Le polyphénol aromatique et/ou le monophénol aromatique est tel que décrit précédemment, en particulier il s'agit préférentiellement d'un polyphénol aromatique et/ou d'un monophénol aromatique qui est une molécule simple.

On définit N1 comme le nombre de sites réactifs du composé aromatique comme suit : une fonction aldéhyde représente deux sites réactifs et une fonction hydroxyméthyle représente un site réactif. Ainsi, par exemple, le 5-(hydroxyméthyl)-furfural a N1=3 sites réactifs et le 2,5-di(hydroxyméthyle)furane a N1=2 sites réactifs.

Dans le cas d'un polyphénol aromatique, on définit N2 comme le nombre de sites réactifs du polyphénol aromatique comme suit : chaque carbone libre du noyau aromatique adjacent à une fonction hydroxyle portée par le noyau aromatique représente un site réactif, chaque carbone libre ne pouvant être compté en tant que site réactif que pour une seule fonction hydroxyle adjacente. Ainsi, par exemple, le résorcinol et le phloroglucinol ont chacun N2=3 sites réactifs et le 2,2',4,4'-tétrahydroxydiphényl sulfide a N2=4 sites réactifs.

Dans le cas d'un monophénol aromatique, on définit N'2 comme le nombre de sites réactifs du monophénol aromatique comme suit : chaque carbone libre du noyau aromatique à six chainons adjacent à la fonction hydroxyle portée par le noyau aromatique représente un site réactif et le carbone libre du noyau aromatique à six chainons positionné en para de la fonction hydroxyle représente un site réactif. Ainsi, par exemple, le phénol a N'2=3 sites réactifs.

La résine pré-condensée est obtenue par mélangeage :
- du composé aromatique A1) ; et
- du polyphénol aromatique A2) ; et optionnellement
- du monophénol aromatique A2') ;
dans un solvant basique ayant de préférence un pH compris entre 8 et 13, plus préférentiellement entre 9 et 12, ou dans un solvant acide ou neutre ayant de préférence un pH compris entre 4 et 7, plus préférentiellement entre 5 et 7.

La résine pré-condensée est avantageusement préparée en mélangeant progressivement le polyphénol aromatique et/ou le monophénol aromatique et le composé aromatique A1 dans une solution aqueuse.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Dans la première variante, on ajoute ensuite avantageusement un acide de façon à neutraliser la base et à obtenir une résine pré-condensée pouvant être stockée et utilisée ultérieurement.

Dans la deuxième variante, on ajoute ensuite avantageusement une base de façon à neutraliser l'acide et à obtenir une résine pré-condensée pouvant être stockée et utilisée ultérieurement.

Afin de préparer la résine pré-condensée, la quantité molaire n2 de polyphénol aromatique A2, la quantité molaire n'2 de monophénol aromatique A2' et la quantité molaire n1 du composé aromatique A1 sont telles que [(n2*N2)+(n'2*N'2)]/(n1*N1)>1, de préférence 1<[(n2*N2)+(n'2*N'2)]/(n1*N1)<5.

La résine pré-condensée est ensuite généralement diluée dans l'eau.

### I.5 Additifs - Fabrication de la composition adhésive aqueuse

La composition adhésive aqueuse conforme à l'invention peut bien entendu comporter tout ou partie des additifs habituels pour compositions adhésives aqueuses telles que ceux utilisés dans les colles phénoplastes conventionnelles ; on citera par exemple des bases telles que ammoniaque, hydroxyde de sodium, de potassium ou d'ammonium, des colorants, charges telles que noir de carbone ou silice, antioxydants ou autre stabilisants, des épaississants, par exemple la carboxyméthylecellulose, ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

Typiquement, lors d'une première étape de résinification, on mélange, avantageusement dans l'eau, les constituants de la résine thermodurcissable elle-même.

Cette première étape de résinification peut être réalisée selon plusieurs modes de réalisations.

Avant de décrire en détail les différents modes de réalisation, on précisera tout d'abord que la résine thermodurcissable de la composition adhésive aqueuse peut être obtenue par mélange des constituants de la résine, c'est-à-dire dudit composé A1) tel que défini précédemment, dudit composé aromatique A2) tel que défini précédemment et optionnellement dudit composé A2') tel que défini précédemment dans un solvant soit basique, ayant de préférence un pH compris entre 8 et 13, plus préférentiellement entre 9 et 12, soit acide ou neutre, ayant de préférence un pH compris entre 4 et 7, plus préférentiellement entre 5 et 7. Ce solvant est avantageusement de l'eau rendue basique par ajout d'une base ou rendue acide par l'ajout d'un acide.

Dans un premier mode de réalisation, on utilise une résine pré-condensée à base de polyphénol aromatique telle que définie au paragraphe I.2, c'est-à-dire à base :
- d'au moins un polyphénol aromatique, comprenant :
   (I) un noyau aromatique porteur de trois fonctions hydroxyle en position méta l'une par rapport à l'autre, les deux positions ortho d'au moins une des fonctions hydroxyle étant non substituées ; ou
   (II) plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées
      et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

La résine pré-condensée à base de polyphénol aromatique A2 est avantageusement préparée en mélangeant progressivement le polyphénol aromatique et le composé comprenant au moins une fonction aldéhyde et/ou le composé comprenant au moins deux fonctions hydroxyméthyle portées par un noyau aromatique, par exemple le formaldéhyde, dans des quantités molaires telles que décrites précédemment.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Ainsi, la résine pré-condensée est obtenue par mélangeage :
- dudit polyphénol aromatique, et
- dudit composé susceptible de réagir avec ledit polyphénol aromatique,
dans un solvant basique ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Ainsi, résine pré-condensée est obtenue par mélangeage :
- dudit polyphénol aromatique, et
- dudit composé susceptible de réagir avec ledit polyphénol aromatique,
dans un solvant acide ou neutre ayant de préférence un pH compris entre 4 et 7, plus préférentiellement entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Comme décrit précédemment, on peut avantageusement neutraliser le milieu de façon à obtenir une résine pré-condensée pouvant être stockée et utilisée ultérieurement.

Puis, dans ce premier mode de réalisation, la composition adhésive peut être obtenue par mélangeage :
- de cette résine pré-condensée (composé A2), et
- du composé aromatique A1,
dans un solvant basique ayant de préférence un pH compris entre 8 et 13, plus préférentiellement entre 9 et 12, ou dans un solvant acide ou neutre ayant de préférence un pH compris entre 4 et 7, plus préférentiellement entre 5 et 7.

En particulier, on mélange progressivement cette résine pré-condensée à base de polyphénol aromatique (composé A2), et le composé aromatique A1 dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7. Que ce soit en milieu acide ou basique, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C. L'homme du métier saura ajuster les quantités molaires de résine pré-condensée à base de polyphénol aromatique A2 et du composé aromatique A1 afin d'obtenir une réticulation et une concentration adaptées à l'usage recherché, notamment en fonction de la nature de la résine pré-condensée à base de polyphénol aromatique A2.

Dans un deuxième mode de réalisation, on utilise une résine pré-condensée telle que décrite au paragraphe I-4, c'est-à-dire à base :
A1) d'au moins un composé aromatique porteur d'au moins deux fonctions, l'une de ces fonctions étant une fonction hydroxyméthyle, l'autre étant une fonction aldéhyde ou une fonction hydroxyméthyle, le composé aromatique comprend au moins un noyau aromatique, par exemple le 5-(hydroxyméthyl)-furfural et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, par exemple le phloroglucinol.

Dans ce deuxième mode de réalisation, la résine pré-condensée à base de polyphénol aromatique conforme à l'invention est préparée dans des conditions analogues à la résine pré-condensée à base de polyphénol aromatique du premier mode de réalisation. Puis, on mélange progressivement cette résine pré-condensée à base de polyphénol aromatique selon l'invention A2 et le composé aromatique A1 dans des conditions analogues à celles du premier mode de réalisation. Là encore, l'homme du métier saura ajuster les quantités molaires de résine pré-condensée à base de polyphénol aromatique A2 et du composé aromatique A1 afin d'obtenir une réticulation et une concentration adaptées à l'usage recherché, notamment en fonction de la nature de la résine pré-condensée à base de polyphénol aromatique A2.

Dans un troisième mode de réalisation, on utilise un polyphénol aromatique A2 selon l'invention sous forme d'une molécule simple, par exemple du phloroglucinol.

Dans une première variante, la résine thermodurcissable est obtenue par :
- mélangeage du polyphénol aromatique A2) sous forme d'une molécule simple dans un solvant basique ayant de préférence un pH compris entre 8 et 13, plus préférentiellement entre 9 et 12, ou dans un solvant acide ou neutre ayant de préférence un pH compris entre 4 et 7, plus préférentiellement entre 5 et 7,
- puis ajout du composé aromatique A1).

En particulier, on mélange tout d'abord le polyphénol aromatique A2 dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation du polyphénol aromatique A2.

Puis, on ajoute le composé aromatique A1). En particulier, on ajoute progressivement le composé aromatique A1 dans des conditions analogues à celles du premier mode de réalisation.

Dans une deuxième variante, la résine thermodurcissable est obtenue par :
- mélangeage du composé aromatique A1) dans un solvant basique ayant de préférence un pH compris entre 8 et 13, plus préférentiellement entre 9 et 12, ou dans un solvant acide ou neutre ayant de préférence un pH compris entre 4 et 7, plus préférentiellement entre 5 et 7,
- puis ajout du polyphénol aromatique A2) sous forme de molécule simple.

En particulier, on mélange tout d'abord le composé aromatique A1 dans une solution aqueuse, de préférence dans un solvant basique tel qu'une solution aqueuse de soude, ayant de préférence un pH compris entre 8 et 13, plus préférentiellement entre 9 et 12. Puis, on ajoute le polyphénol aromatique A2 et on mélange les composants dans des conditions analogues à celles du premier mode de réalisation.

Ce troisième mode de réalisation est particulièrement avantageux par rapport aux premier et deuxième modes de réalisation car il permet d'obtenir un temps de gel ou de prise de la composition adhésive plus grand.

On mélange une quantité molaire n2 de polyphénol aromatique A2 et une quantité molaire n1 du composé aromatique A1 telles que 0,3≤(n2*N2)/(n1*N1)≤3 et de préférence 1<(n2*N2)/(n1*N1)≤2.

Dans chacun des trois modes de réalisation précédents, on pourrait remplacer le polyphénol aromatique en partie, par un monophénol aromatique comprenant au moins un noyau aromatique à six chainons portant une unique fonction hydroxyle, les deux positions ortho de la fonction hydroxyle étant non substituées, ou au moins une position ortho et la position para de la fonction hydroxyle étant non substituées.

Dans ce cas, dans le troisième mode de réalisation décrit ci-dessus dans lequel on utilise des composés sous forme de molécules simples, on mélangerait alors une quantité molaire n2 de polyphénol aromatique A2 et/ou une quantité molaire n'2 de monophénol aromatique A2' et une quantité molaire n1 du composé aromatique A1 telle que 0,3≤[(n2*N2)+(n'2*N'2)]/(n1*N1)≤3 et de préférence 1<[(n2*N2)+(n'2*N'2)]/(n1*N1)≤2.

Dans l'un quelconque de ces trois modes de réalisation, on obtient ensuite directement la composition adhésive aqueuse de l'invention ou la résine thermodurcissable partiellement réticulée est diluée dans l'eau, pour constituer la composition adhésive aqueuse de l'invention.

Par exemple, les constituants de la composition adhésive sont ajoutés dans l'ordre suivant : l'eau, d'éventuels additifs solubles dans l'eau (par exemple ammoniaque), la résine thermodurcissable partiellement réticulée (diluée). L'ensemble est mélangé sous agitation pendant 1 à 30 min, par exemple à 20°C.

Lorsque la composition adhésive aqueuse de l'invention contient également un latex, la résine thermodurcissable partiellement réticulée est généralement diluée dans l'eau, avant d'être ajoutée au latex ou aux latex (s'ils sont plusieurs) d'élastomère(s) insaturé(s), selon un mode opératoire général qui est bien connu de l'homme du métier. Les constituants de la composition adhésive sont avantageusement ajoutés dans l'ordre suivant : l'eau, d'éventuels additifs solubles dans l'eau (par exemple ammoniaque), le ou les latex (peu importe l'ordre), la résine thermodurcissable partiellement réticulée (diluée). L'ensemble est mélangé sous agitation pendant 1 à 30 min, par exemple à 20°C.

De préférence, lors de cette étape de constitution de la composition adhésive aqueuse, on fera en sorte que la composition adhésive aqueuse présente un pH compris entre 8 et 13, plus préférentiellement entre 9 et 12 de façon à limiter l'éventuelle précipitation du ou de certains latex d'élastomère(s) insaturé(s).

Ainsi, dans le cas où, lors de l'étape de résinification précédent cette étape de constitution de la composition adhésive aqueuse, on a utilisé un solvant acide ou neutre ou un solvant basique qui a été neutralisé, on ajoutera une base permettant d'obtenir un pH compris entre 8 et 13, plus préférentiellement entre 9 et 12 préalablement à l'ajout du ou des latex d'élastomère(s) insaturé(s) de façon à limiter l'éventuelle précipitation du ou de certains latex d'élastomère(s) insaturé(s).

La concentration de la composition peut être ajustée en fonction de son utilisation spécifique (temps d'ouverture, viscosité).

Dans un premier mode de réalisation, la composition adhésive finale ainsi préparée, présente un taux d'extrait sec total, avantageusement un taux d'extrait sec de résine thermodurcissable compris entre 5 et 70 %, plus préférentiellement entre 10 et 50 % en poids.

Dans un second mode de réalisation, la composition adhésive finale ainsi préparée présente un taux d'extrait sec total, avantageusement un taux d'extrait sec de résine thermodurcissable compris entre 20 et 80 %, plus préférentiellement entre 30 et 70 % en poids.

Par taux d'extrait sec total de la composition adhésive, on entend le rapport entre la masse de résidu obtenue après séchage de la composition adhésive sur la masse de la composition adhésive avant séchage.

Par taux d'extrait sec de la résine thermodurcissable, on entend le rapport entre la masse de la résine thermodurcissable obtenue après séchage de la composition adhésive sur la masse de la composition adhésive avant séchage.

Ces deux taux d'extrait sec sont mesurés conformément à la norme NF EN 827 (mars 2006).

La composition pourra être utilisée immédiatement ou bien stockée à température ambiante (23°C) pendant un temps de maturation pouvant varier typiquement de une à plusieurs heures voire plusieurs jours, avant son utilisation finale.

Dans un premier mode de réalisation, la teneur en eau de la composition adhésive aqueuse de l'invention est de préférence comprise entre 60 et 90 % en poids, plus préférentiellement entre 60 et 85 % en poids.

Dans un second mode de réalisation, la teneur en eau de la composition adhésive aqueuse de l'invention est de préférence comprise entre 20 et 80 % en poids, plus préférentiellement entre 30 et 70 % en poids.

Par teneur en eau de la composition adhésive aqueuse, on entend le poids en eau par rapport au poids total de la composition adhésive.

### II - ASSEMBLAGE COLLÉ DE L'INVENTION

### II.1 - Définitions ; exemples

Comme indiqué précédemment, la présente invention concerne également l'utilisation de la composition adhésive aqueuse comportant une résine thermodurcissable à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées précédemment décrite
pour le collage de deux éléments.

Ainsi, un assemblage collé de deux éléments selon l'invention comprend une couche de la composition adhésive aqueuse telle que décrite précédemment joignant les deux éléments l'un à l'autre.

Dans un mode de réalisation, ces deux éléments sont en bois.

Par bois, on entend le tissu végétal issu de plantes ligneuses. Des exemples de tissu végétal sont le tronc, les branches et les racines. Par exemple, les plantes ligneuses dont sont issues le tissu végétal sont le chêne, le châtaignier, le frêne, le noyer, le hêtre, le peuplier, le sapin, le pin, l'olivier, l'aulne ou encore le bouleau.

On pourra également utiliser la colle pour le collage d'éléments réalisés dans des matériaux différents du bois, par exemple les matières plastiques, par exemple les matières thermodurcissables ou thermoplastique, les textiles, les matières minérales ou les mélanges de ces matériaux, y compris avec le bois

Par élément, on entend toute particule ou morceau monolithique. Des exemples d'éléments en bois sont des plis destinés à former un assemblage contreplaqué, des lattis destinés à former un assemblage latté, des particules telles que des copeaux, de la sciure, de la farine ou des flocons, pour former un assemblage aggloméré, que les particules soient orientées ou non, des fibres destinées à former un assemblage de fibres tel qu'un panneau haute ou moyenne densité, des morceaux de bois massif, également appelés bois d'œuvre, destinés à former des assemblages tels que des meubles, des charpentes.

### 11.2 - Fabrication de l'assemblage collé

L'assemblage collé de l'invention peut être préparé selon un procédé de collage de deux éléments dans lequel :
- on applique une couche de la composition adhésive aqueuse telle que décrite précédemment sur au moins l'un des deux éléments, et
- on joint les deux éléments l'un à l'autre par l'intermédiaire de la couche de la composition adhésive aqueuse.

L'étape d'application de la composition adhésive sur l'un ou les éléments peut être réalisée selon toute méthode appropriée, notamment par toute technique d'enduction connue telle que par exemple pulvérisation, imprégnation, injection sous pression ou encore par une combinaison d'une ou plusieurs de ces techniques.

On pourra préférentiellement utiliser un taux de composition adhésive aqueuse allant de 70 à 350 gr.m⁻².

Après l'étape d'application de la composition adhésive, l'assemblage collé est chauffé à une température allant de 30°C à 200°C, de préférence de 80°C à 160°C en fonctions des applications visées. Ce traitement thermique vise à éliminer tout solvant ou eau et à réticuler la résine thermodurcissable. Selon les domaines d'application, le traitement thermique pourra être conduit en deux temps : un premier traitement thermique visant à éliminer tout solvant ou eau, un deuxième traitement thermique visant à finir la réticulation de la résine thermodurcissable.

De préférence, l'assemblage collé est maintenu sous pression, par exemple sous une pression allant jusqu'à 18 kg.cm⁻². Plus préférentiellement, l'étape de maintien sous pression est réalisée simultanément avec l'étape de chauffage.

La durée de l'étape de chauffage et/ou de maintien sous pression varie de quelques minutes à quelques heures selon les cas, notamment en fonction du couple température-pression utilisé.

Dans un mode de réalisation, les deux éléments à assembler sont en bois.

L'homme du métier saura ajuster, le cas échéant, la température et la durée du traitement thermique ci-dessus, en fonction des conditions particulières de mise en œuvre de l'invention, notamment de la nature exacte de l'élément. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

### III - EXEMPLES DE REALISATION DE L'INVENTION ET TESTS COMPARATIFS

Ces essais démontrent que le collage de deux éléments de bois avec une composition adhésive aqueuse selon l'invention est équivalente voire même améliorée dans certains cas, par rapport à des collages avec une composition adhésive conventionnelle.

Pour cela quatre compositions adhésives aqueuses ont été préparées, une conformément à l'invention (notées ci-après C-4), une composition conformément à l'utilisation selon l'invention (C-3) et deux non conformément à l'invention (compositions témoins notées ci-après C-1 et C-2). Leurs formulations (exprimées en pourcentage en poids) sont présentées dans le tableau 1 annexé. Les quantités répertoriées dans ce tableau sont celles des constituants à l'état sec, ramenées à un total de 100 parties en poids de composition adhésive aqueuse (c'est-à-dire les constituants et l'eau).

La composition adhésive C-1 est une composition témoin à base de formaldéhyde et d'une résine pré-condensée résorcinol-formaldéhyde.

La composition adhésive C-2 est une composition témoin à base de formaldéhyde et de phloroglucinol.

La composition C-3 est une composition adhésive aqueuse conformément à l'utilisation selon l'invention à base de 5-(hydroxyméthyl)-furfural et d'une résine pré-condensée résorcinol-formaldéhyde.

La composition C-4 est une composition adhésive aqueuse selon l'invention à base de 5-(hydroxyméthyl)-furfural et de phloroglucinol.

### Protocole de réalisation de la composition adhésive aqueuse

Dans un ballon de 250 mL muni d'un système d'agitation mécanique on pèse l'eau et la soude. On agite pour homogénéiser (par exemple à 250 tours par minute). On ajoute ensuite le polyphénol aromatique (par exemple le phloroglucinol ou la résine SRF 1524). On attend que la solution devienne homogène puis on ajoute le composé aromatique (par exemple le formol ou l'HMF (5-hydroxyméthyl fufural)). On attend, en fonction des constituants ajoutés (que l'homme de l'art saura déterminer), entre 5 et 15 minutes sous agitation à température ambiante. A l'issu de ce temps la composition adhésive aqueuse est prête à être utilisée.

### Protocole de réalisation de l'éprouvette

Chaque éprouvette de test comprend deux éléments de bois, en l'espèce du hêtre de masse volumique égale à 0,83 g.cm⁻³, présentant chacun une forme générale parallélépipédique de dimensions 70 cm x 25 mm x 3 mm. Sur chaque extrémité des éléments, on applique une couche de la composition adhésive aqueuse sur toute la largeur de l'élément, ici 25 mm et sur une longueur de 1 cm. Puis, on joint les deux éléments par l'intermédiaire des couches de composition appliquées sur chaque élément de bois. La surface totale encollée de chaque élément de bois est donc de 5 cm². Une fois jointe, la surface encollée de l'éprouvette formée par les deux éléments de bois n'est plus que de 2,5 cm². En fonction des formulations, il est possible d'encoller 1 seul des 2 éléments de bois et de réaliser l'éprouvette en utilisant 1 élément de bois encollé et 1 élément de bois non encollé. L'éprouvette non encollé sera alors déposée en contact de l'éprouvette encollée. L'éprouvette ainsi formée peut être cuite à différentes conditions de cuisson que l'homme de l'art saura adapter en fonction de ses besoins par exemple pendant 5 minutes à 140 °C.

A l'issue de la cuisson, l'éprouvette ainsi constituée des deux éléments joints par collage est mise en place dans les mâchoires d'une machine de traction, puis tractée à une vitesse et une température données (par exemple, dans le cas présent, à 10 mm/min et 20°C).

On caractérise les niveaux d'adhésion en mesurant la force dite d'arrachage (notée Fmax) pour disjoindre les deux éléments l'un de l'autre via une cassure de la couche de collage. Une valeur supérieure à celle de l'éprouvette témoin, arbitrairement fixée à 100, indique un résultat amélioré, c'est-à-dire une force d'arrachage supérieure à celle de l'éprouvette témoin.

Les compositions adhésives aqueuses C-3 et C-4, dénuées de formaldéhyde, présentent une force d'arrachage analogue voire supérieure aux compositions témoins C-1 et C-2.

Les compositions adhésives aqueuses selon l'invention constituent donc une alternative fort intéressante à l'emploi des compositions adhésives de l'état de la technique.

**Tableau 1**

| **Compositions adhésives** | **C-1** | **C-2** | **C-3** | **C-4** |
|---|---|---|---|---|
| Composé : | | | | |
| Formaldéhyde (1) | 27.3 | 34.3 | - | - |
| 5-(hydroxyméthyl)-furfural (2) | - | - | 25.1 | 30 |
| Polyphénol : | | | | |
| Phloroglucinol (3) | - | 26.7 | - | 26.7 |
| SRF 1524 (4) | 39 | - | 41.1 | - |
| Hydroxyde de sodium (5) | 2.3 | 2.3 | 2.3 | 2.3 |
| | | | | |
| Poids total d'extrait sec de composition adhésive | 78.6 | 73.3 | 78.5 | 59 |
| Poids d'eau | 31.4 | 36.7 | 31.5 | 41 |

| **Tests d'adhésion** | | | | |
|---|---|---|---|---|
| Fₘₐₓ à 20 °C | 100 | 85 | 105 | 100 |

| | | | | |
|---|---|---|---|---|
| 1) Formol (de la société Caldic ; dilué à 36%) ; 2) HMF (de la société Aldrich ; de pureté > 99%) ; 3) Phloroglucinol (de la société Alfa Aesar ; de pureté 99%) ; 4) Résine précondensée SRF 1524 (de la société Schenectady ; dilué à 75%) ; 5) Hydroxyde de sodium (de la société Aldrich ; dilué à 30%). | | | | |

## Revendications

1. Composition adhésive aqueuse, **caractérisée en ce qu'**elle comporte une résine thermodurcissable à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant :
- un noyau aromatique porteur de trois fonctions hydroxyle en position méta l'une par rapport à l'autre, les deux positions ortho d'au moins une des fonctions hydroxyle étant non substituées ; ou
- plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

2. Composition selon la revendication précédente, dans laquelle la résine thermodurcissable est également à base :
A2') d'au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées.

3. Composition selon l'une quelconque des revendications précédentes, **caractérisée en ce que** le composé aromatique A1 répond à la formule générale (II) : 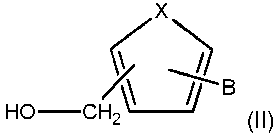 où B représente CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle, de préférence le composé aromatique A1 répond à la formule générale (II'a1) ou (II'a2) :

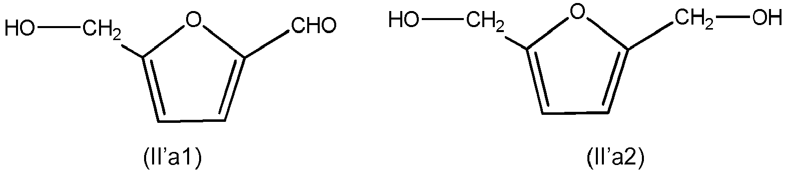

4. Composition selon l'une quelconque des revendications précédentes, dans laquelle le noyau aromatique du polyphénol aromatique satisfait au moins l'une des conditions suivantes :
- il est porteur de trois fonctions hydroxyle en position méta les unes par rapport aux autres ;
- les deux positions ortho de chaque fonction hydroxyle sont non substituées ;
- le reste du noyau aromatique du polyphénol aromatique est non substitué.

5. Composition selon l'une quelconque des revendications précédentes, dans laquelle le polyphénol aromatique comprend plusieurs noyaux aromatiques, avantageusement chaque noyau aromatique du polyphénol aromatique est un noyau benzénique, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

6. Composition selon la revendication précédente, dans laquelle au moins un des noyaux aromatiques du polyphénol aromatique est porteur de trois fonctions hydroxyle en position méta les unes par rapport aux autres.

7. Composition selon la revendication 5 ou 6, dans laquelle les deux positions ortho de chaque fonction hydroxyle d'au moins un noyau aromatique du polyphénol aromatique sont non substituées.

8. Composition selon l'une quelconque des revendications précédentes, dans laquelle le polyphénol aromatique est choisi dans le groupe constitué par , le phloroglucinol, le 2,2',4,4'-tétrahydroxydiphényl sulfide, la 2,2',4,4'-tétrahydroxybenzophenone , et les mélanges de ces composés, avantageusement le phloroglucinol.

9. Composition selon l'une quelconque des revendications précédentes, dans laquelle le polyphénol aromatique est une résine pré-condensée à base :
- d'au moins un polyphénol aromatique tel que défini à l'une quelconque des revendications précédentes, et
- à base d'au moins un composé susceptible de réagir avec ledit polyphénol aromatique comprenant au moins une fonction aldéhyde et/ou un composé susceptible de réagir avec ledit polyphénol aromatique comprenant au moins deux fonctions hydroxyméthyle portées par un noyau aromatique de préférence le composé susceptible de réagir avec ledit polyphénol aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés.

10. Composition selon la revendication 9, dans laquelle le composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle est choisi dans le groupe constitué par le 5-(hydroxyméthyl)-furfural, le 2,5-di(hydroxyméthyle)furane et les mélanges de ces composés.

11. Composition selon l'une quelconque des revendications précédentes, comprenant moins de 16 % en masse de latex d'élastomère diénique insaturé, de préférence au plus 10 %, de préférence au plus 5 %, et plus préférentiellement au plus 1% en masse de latex d'élastomère diénique insaturé.

12. Composition selon l'une quelconque des revendications précédentes, dans laquelle la teneur en eau de la composition adhésive aqueuse est comprise entre 20 et 80% en poids, de préférence entre 30 et 70% en poids.

13. Solution adhésive aqueuse comprenant une résine thermodurcissable pré-condensée à base:
- A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- A2) d'au moins un polyphénol aromatique comprenant :
- un noyau aromatique porteur de trois fonctions hydroxyle en position méta l'une par rapport à l'autre, les deux positions ortho d'au moins une des fonctions hydroxyle étant non substituées ; ou
- plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substitué..

14. Utilisation d'une composition adhésive ou d'une solution adhésive, comportant une résine thermodurcissable à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées,
pour le collage de deux éléments, avantageusement de deux éléments en bois.

15. Assemblage collé de deux éléments, avantageusement en bois, comprenant une couche de la composition adhésive aqueuse telle que définie dans la revendication 14 joignant les deux éléments l'un à l'autre.

## Patentansprüche

1. Wässrige Klebstoffzusammensetzung, **dadurch gekennzeichnet, dass** sie ein wärmehärtbares Harz auf Basis von
A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
A2) mindestens einem aromatischen Polyphenol, umfassend:
- einen aromatischen Kern, der drei Hydroxylfunktionen in meta-Position zueinander trägt, wobei die beiden ortho-Positionen zu mindestens einer der Hydroxylfunktionen unsubstituiert sind; oder
- mehrere aromatische Kerne, von denen mindestens zwei jeweils mindestens zwei Hydroxylfunktionen in meta-Position zueinander tragen, wobei die beiden ortho-Positionen zu mindestens einer der Hydroxylfunktionen mindestens eines aromatischen Kerns unsubstituiert sind;
umfasst.

2. Zusammensetzung nach dem vorhergehenden Anspruch, wobei das wärmehärtbare Harz außerdem auf
A2') mindestens einem aromatischen Monophenol mit mindestens einem sechsgliedrigen aromatischen Kern, der eine einzige Hydroxylfunktion trägt,
- wobei die beiden ortho-Positionen der Hydroxylfunktion unsubstituiert sind oder
- wobei mindestens eine ortho-Position und die para-Position zur Hydroxylfunktion unsubstituiert sind, basiert.

3. Zusammensetzung nach einem der vorhergehenden Ansprüche, **dadurch gekennzeichnet, dass** die aromatische Verbindung A1 der allgemeinen Formel (II) entspricht: 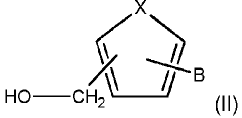 wobei B für CHO oder CH₂OH steht, X für O, NR₁, NO, S, SO, SO₂, SR₂R₃ steht, R₁ für Wasserstoff oder eine Alkyl-, Aryl-, Arylalkyl-, Alkylaryl- oder Cycloalkylgruppe steht, R₂, R₃ jeweils unabhängig voneinander für Wasserstoff oder eine Alkyl-, Aryl-, Arylalkyl-, Alkylaryl- oder Cycloalkylgruppe stehen, vorzugsweise die aromatische Verbindung A1 der folgenden allgemeinen Formel (II'a1) oder (II'a2) entspricht:

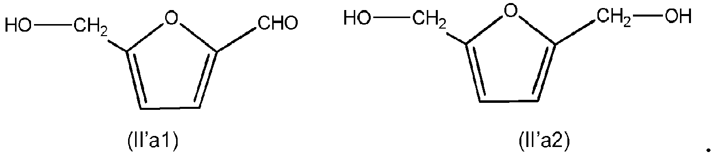

4. Zusammensetzung nach einem der vorhergehenden Ansprüche, wobei der aromatische Kern des aromatischen Polyphenols mindestens eine der folgenden Bedingungen erfüllt:
- er trägt drei Hydroxylfunktionen in meta-Position zueinander;
- die beiden ortho-Positionen jeder Hydroxylfunktion sind unsubstituiert;
- der Rest des aromatischen Kerns des aromatischen Polyphenols ist unsubstituiert.

5. Zusammensetzung nach einem der vorhergehenden Ansprüche, wobei das aromatische Polyphenol mehrere aromatische Kerne umfasst, vorteilhafterweise jeder aromatische Kern des aromatischen Polyphenols ein Benzolkern ist, wobei mindestens zwei davon jeweils mindestens zwei Hydroxylfunktionen in meta-Position zueinander tragen, wobei die beiden ortho-Positionen zu mindestens einer der Hydroxylfunktionen mindestens eines aromatischen Kerns unsubstituiert sind.

6. Zusammensetzung nach dem vorhergehenden Anspruch, wobei mindestens einer der aromatischen Kerne des aromatischen Polyphenols drei Hydroxylfunktionen in meta-Position zueinander trägt.

7. Zusammensetzung nach Anspruch 5 oder 6, wobei die beiden ortho-Positionen jeder Hydroxylfunktion mindestens eines aromatischen Kerns des aromatischen Polyphenols unsubstituiert sind.

8. Zusammensetzung nach einem der vorhergehenden Ansprüche, wobei das aromatische Polyphenol aus der Gruppe bestehend aus Phloroglucinol, 2,2',4,4'-Tetrahydroxydiphenylsulfid, 2,2',4,4'-Tetrahydroxybenzophenon und Mischungen dieser Verbindungen, vorteilhafterweise Phloroglucinol, ausgewählt ist.

9. Zusammensetzung nach einem der vorhergehenden Ansprüche, wobei es sich bei dem aromatischen Polyphenol um ein vorkondensiertes Harz auf Basis von
- mindestens einem aromatischen Polyphenol gemäß einem der vorhergehenden Ansprüche und
- auf Basis mindestens einer Verbindung, die mit dem aromatischen Polyphenol mit mindestens einer Aldehydfunktion reagieren kann, mit mindestens einer Aldehydfunktion und/oder einer Verbindung, die mit dem aromatischen Polyphenol mit mindestens zwei Hydroxymethylfunktionen an einem aromatischen Kern reagieren kann, vorzugsweise die Verbindung, die mit dem aromatischen Polyphenol reagieren kann, aus der Gruppe bestehend aus einer aromatischen Verbindung mit einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, Formaldehyd, Furfuraldehyd, 2,5-Furandicarboxaldehyd, 1,4-Benzoldicarboxaldehyd, 1,3-Benzoldicarboxaldehyd, 1,2-Benzoldicarboxaldehyd und Mischungen dieser Verbindungen ausgewählt ist,
handelt.

10. Zusammensetzung nach Anspruch 9, wobei die aromatische Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, aus der Gruppe bestehend aus 5-(Hydroxymethyl)furfural, 2,5-Di(hydroxymethyl)furfural und Mischungen dieser Verbindungen ausgewählt ist.

11. Zusammensetzung nach einem der vorhergehenden Ansprüche, umfassend weniger als 16 Massen-% Latex von ungesättigtem Dienelastomer, vorzugsweise höchstens 10 Massen-%, vorzugsweise höchstens 5 Massen-% und weiter bevorzugt höchstens 1 Massen-% Latex von ungesättigtem Dienelastomer.

12. Zusammensetzung nach einem der vorhergehenden Ansprüche, wobei der Wassergehalt der wässrigen Klebstoffzusammensetzung zwischen 20 und 80 Gew.-%, vorzugsweise zwischen 30 und 70 Gew.-%, liegt.

13. Wässrige Klebstofflösung, umfassend ein vorkondensiertes wärmehärtbares Harz auf Basis von
- A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
- A2) mindestens einem aromatischen Polyphenol, umfassend:
- einen aromatischen Kern, der drei Hydroxylfunktionen in meta-Position zueinander trägt, wobei die beiden ortho-Positionen zu mindestens einer der Hydroxylfunktionen unsubstituiert sind; oder
- mehrere aromatische Kerne, von denen mindestens zwei jeweils mindestens zwei Hydroxylfunktionen in meta-Position zueinander tragen, wobei die beiden ortho-Positionen zu mindestens einer der Hydroxylfunktionen mindestens eines aromatischen Kerns unsubstituiert sind.

14. Verwendung einer Klebstoffzusammensetzung oder einer wässrigen Klebstofflösung, umfassend ein wärmehärtbares Harz auf Basis von:
A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
A2) mindestens einem aromatischen Polyphenol, umfassend mindestens einen aromatischen Kern, der mindestens zwei Hydroxylfunktionen in meta-Position zueinander trägt, wobei die beiden ortho-Positionen zu mindestens einer der Hydroxylfunktionen unsubstituiert sind;
zum Verkleben von zwei Elementen, vorzugsweise von zwei Elementen aus Holz.

15. Klebverbund aus zwei Elementen, vorteilhafterweise aus Holz, umfassend eine Schicht der wässrigen Klebstoffzusammensetzung gemäß Anspruch 14, die die beiden Elemente miteinander verbindet.

## Claims

1. Aqueous adhesive composition, **characterized in that** it comprises a thermosetting resin based on:
A1) at least one aromatic compound comprising at least one aromatic ring bearing at least two functions, one of these functions being a hydroxymethyl function and the other being an aldehyde function or a hydroxymethyl function; and
A2) at least one aromatic polyphenol comprising:
- at least one aromatic ring bearing at least two hydroxyl functions in the meta position relative to one another, the two positions ortho to at least one of the hydroxyl functions being unsubstituted; or
- several aromatic rings, at least two of these each bearing at least two hydroxyl functions in the meta position relative to one another, the two positions ortho to at least one of the hydroxyl functions of at least one aromatic ring being unsubstituted.

2. Composition according to the preceding claim, wherein the thermosetting resin is also based on:
A2') at least one aromatic monophenol comprising at least one six-membered aromatic ring bearing a single hydroxyl function,
- the two positions ortho to the hydroxyl function being unsubstituted, or
- at least one position ortho to and the position para to the hydroxyl function being unsubstituted.

3. Composition according to either one of the preceding claims, **characterized in that** the aromatic compound A1 corresponds to the general formula (II): 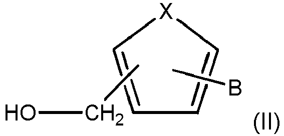 in which B represents CHO or CH₂OH, X represents O, NR₁, NO, S, SO, SO₂, SR₂R₃, R₁ represents a hydrogen, an alkyl, aryl, arylalkyl, alkylaryl or cycloalkyl group, R₂, R₃ each represent, independently of one another, a hydrogen, an alkyl, aryl, arylalkyl, alkylaryl or cycloalkyl group, preferably the aromatic compound A1 corresponds to the general formula (II'a1) or (II'a2):

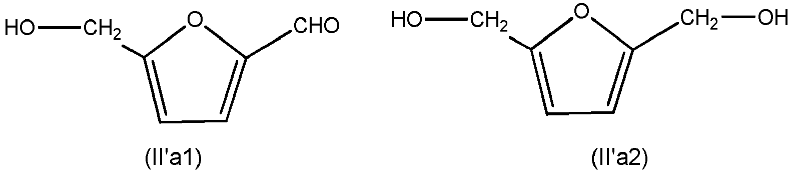

4. Composition according to any one of the preceding claims, wherein one of these three conditions is met:
- the aromatic ring of the aromatic polyphenol bears three hydroxyl functions in the meta position relative to one another;
- .the two positions ortho to each hydroxyl function on the aromatic ring of the aromatic polyphenol are unsubstituted;
- .the remainder of the aromatic ring of the aromatic polyphenol is unsubstituted.

5. Composition according to any one of the preceding claims, wherein the aromatic polyphenol comprises several aromatic rings, at least two of these each bearing at least two hydroxyl functions in the meta position relative to one another, the two positions ortho to at least one of the hydroxyl functions of at least one aromatic ring being unsubstituted.

6. Composition according to the preceding claim, wherein at least one of the aromatic rings of the aromatic polyphenol bears three hydroxyl functions in the meta position relative to one another.

7. Composition according to Claim 5 or 6, wherein the two positions ortho to each hydroxyl function of at least one aromatic ring of the aromatic polyphenol are unsubstituted.

8. Composition according to any one of the preceding claims, wherein the aromatic polyphenol is selected from the group consisting of resorcinol, phloroglucinol, 2,2',4,4'-tetrahydroxydiphenyl sulfide, 2,2',4,4'-tetrahydroxybenzophenone and the mixtures of these compounds, advantageously phloroglucinol.

9. Composition according to any one of the preceding claims, wherein the aromatic polyphenol is a pre-condensed resin based:
- on at least one aromatic polyphenol as defined in any one of the preceding claims, and
- based on at least one compound capable of reacting with said aromatic polyphenol comprising at least one aldehyde function and/or a compound capable of reacting with said aromatic polyphenol comprising at least two hydroxymethyl functions borne by an aromatic ring, preferably the compound capable of reacting with said aromatic polyphenol is selected from the group consisting of an aromatic compound comprising an aromatic ring bearing at least two functions, one of these functions being a hydroxymethyl function, the other being an aldehyde function or a hydroxymethyl function, formaldehyde, furfuraldehyde, 2,5-furandicarboxaldehyde, 1,4-benzenedicarboxaldehyde, 1,3-benzenedicarboxaldehyde, 1,2-benzenedicarboxaldehyde and mixtures of these compounds.

10. Composition according to Claim 9, wherein the aromatic compound comprising an aromatic ring bearing at least two functions, one of these functions being a hydroxymethyl function, the other being an aldehyde function or a hydroxymethyl function, is selected from the group consisting of 5-(hydroxymethyl)furfural, 2,5-di(hydroxymethyl)furan and mixtures of these compounds.

11. Composition according to any one of the preceding claims, comprising less than 16% by weight of unsaturated diene elastomer latex, preferably at most 10%, more preferably at most 5%, and more preferentially at most 1% by weight of unsaturated diene elastomer latex.

12. Composition according to any one of the preceding claims, wherein the water content of the aqueous adhesive composition is between 20 and 80% by weight, preferably between 30 and 70% by weight.

13. Aqueous adhesive solution comprising a pre-condensed thermosetting resin based on:
- A1) at least one aromatic compound comprising at least one aromatic ring bearing at least two functions, one of these functions being a hydroxymethyl function and the other being an aldehyde function or a hydroxymethyl function; and
- A2) at least one aromatic polyphenol comprising :
- at least one aromatic ring bearing at least two hydroxyl functions in the meta position relative to one another, the two positions ortho to at least one of the hydroxyl functions being unsubstituted; or
- several aromatic rings, at least two of these each bearing at least two hydroxyl functions in the meta position relative to one another, the two positions ortho to at least one of the hydroxyl functions of at least one aromatic ring being unsubstituted.

14. Use of an adhesive composition or of an adhesive solution comprises a thermosetting resin based on:
A1) at least one aromatic compound comprising at least one aromatic ring bearing at least two functions, one of these functions being a hydroxymethyl function and the other being an aldehyde function or a hydroxymethyl function; and
A2) at least one aromatic polyphenol comprising at least one aromatic ring bearing at least two hydroxyl functions in the meta position relative to one another, the two positions ortho to at least one of the hydroxyl functions being unsubstituted
for the adhesive bonding of two elements, advantageously of two elements made of wood.

15. Adhesively bonded assembly of two elements, advantageously made of wood, comprising a layer of the aqueous adhesive composition according to Claim 14 joining the two elements to one another.
